(19) Europäisches Patentamt
European Patent Office
Office européen des brevets

(11) EP 0 675 087 B1

(12) **FASCICULE DE BREVET EUROPEEN**

(45) Date de publication et mention de la délivrance du brevet:
**02.02.2000 Bulletin 2000/05**

(51) Int Cl.[7]: **C03C 17/30**, G02B 1/10, C09D 4/00

(21) Numéro de dépôt: **95400686.2**

(22) Date de dépôt: **28.03.1995**

(54) **Composition pour un revêtement non mouillable**

Zusammensetzung für eine nichtbenetzbare Beschichtung

Composition for a non-wettable coating

(84) Etats contractants désignés:
**BE DE DK ES GB IT NL SE**

(30) Priorité: **29.03.1994 FR 9403689**

(43) Date de publication de la demande:
**04.10.1995 Bulletin 1995/40**

(73) Titulaire: **SAINT-GOBAIN VITRAGE**
**92400 Courbevoie (FR)**

(72) Inventeurs:
- **Frugier, Dominique**
  **F-93230 Romainville (FR)**
- **Vaneeckhoutte, Philippe**
  **F-77100 Meaux (FR)**
- **Robert, Anne**
  **F-94000 Creteil (FR)**
- **Chartier, Pascal**
  **F-75015 Paris (FR)**
- **Leclaire, Yves**
  **F-77380 Combs la Ville (FR)**

(74) Mandataire: **Muller, René et al**
**SAINT-GOBAIN RECHERCHE**
**39, quai Lucien Lefranc**
**93303 Aubervilliers (FR)**

(56) Documents cités:
**EP-A- 0 476 202** **EP-A- 0 549 335**
**US-A- 5 013 788**

- **W. NOLL: "Chemistry and Technology of Silicones, pp. 143-147" , , ACADEMIC PRESS, INC., SAN DIEGO/USA**
- **: "Ullmann's Encyclopedia of Industrial Chemistry, 5ième édn., tome A24, page 38" , , VCH , WEINHEIM/DE**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 675 087 B1

Printed by Jouve, 75001 PARIS (FR)

## Description

La présente invention concerne une composition pour un revêtement "non mouillable" et son procédé de fabrication. L'invention concerne également les articles revêtus d'une telle composition et leurs procédés de fabrication.
Les articles envisagés selon l'invention sont des articles en verre minéral ou organique, tels que notamment des vitrages ou des lentilles ophtalmiques, ou tout autre article analogue. Ces vitrages sont ceux utilisés, en particulier, dans le domaine aéronautique ou automobile. Il peut s'agir aussi de vitrages utilisés dans le domaine du bâtiment ou dans le domaine de l'aménagement intérieur comme, par exemple, des vitrages utilisés comme panneaux décoratifs, des vitrages pour l'ameublement, etc...
Le caractère de mouillabilité auquel il est fait référence vise le fait que par exemple les liquides polaires ou non polaires adhèrent sur les articles et forment un film gênant. Par mouillabilité on désigne aussi la tendance des articles à retenir les poussières ou salissures de toutes natures : traces de doigts, insectes, ...
La présence d'eau et/ou salissures entraîne un aspect inesthétique, une altération de la vision à travers ces articles et une diminution de la transparence de l'article. Ces dernières sont particulièrement gênantes lorsqu'il s'agit de vitrages utilisés dans les véhicules de transport ou de verres pour lentilles ophtalmiques.
On connaît différents types de revêtements non mouillables. US- A- 5 013 788 divulgue une composition de revêtement comprenant un alkyltrialkoxysilane, un organotrialkoxysilane à fonction époxy, de la silice colloïdale et une acide dicarboxylique de formule $(CF_2)_n(COOH)_2$.
Un revêtement connu peut être obtenu à partir d'organosilanes fluorés, comme par exemple décrit dans la demande EP 492 545. Un autre revêtement connu peut être obtenu à partir d'un mélange d'un perfluoroalkyle silane et d'un télomère oléfinique fluoré, comme décrit dans la demande EP 452 723.
Cependant, il s'est avéré que les propriétés non mouillables de ces revêtements se détérioraient avec le temps. C'est le cas notamment des revêtements de vitrages de véhicules qui en plus de leur vieillissement naturel, dû notamment aux conditions atmosphériques (humidité, lumière) sont soumis à une abrasion importante engendrée, en particulier, par les impacts de particules, notamment ceux des frottements d'essuie-glaces, de chiffons ou raclettes de nettoyage ou encore les chocs éventuels.
Afin d'améliorer la résistance à l'abrasion, il a été proposé dans la demande EP 548 775 des couches du type polysiloxanne comportant des liaisons du type -Si-O-Si- et contenant des groupements fluorés.
Cependant, la nature de ces couches conduit à un vitrage ne donnant pas entièrement satisfaction pour une utilisation prolongée.
L'invention a pour but de procurer un article revêtu d'une couche non mouillable et qui offre une résistance à l'abrasion améliorée, notamment un article qui conserve ses propriétés de non mouillabilité malgré l'abrasion qu'il subit.
L'invention concerne une composition pour former des revêtements thermodurcissables hydrophobes, oléophobes et résistants à l'abrasion comprenant un hydrolysat obtenu à partir d'une solution comprenant au moins un alkoxysilane époxydé dont les fonctions alkoxy sont directement liées à l'atome de silicium, un silane hydrolysable non époxydé, de la silice colloïdale, un catalyseur et au moins un alkylsilane fluoré hydrolysable.
Les alkylsilanes fluorés utilisés selon l'invention sont, de préférence, des perfluoroalkylsilanes, les atomes de fluor étant à l'extrémité de leur chaîne conférant ainsi au vitrage une hydrophobie et une oléophobie plus marquées.
Leur formule générale est de préférence :

$$CF_3\text{-}(CF_2)_n\text{ -}(CH_2)_m\text{ -}SiX_3 \qquad (I)$$

dans laquelle :

- n = 0 à 12,
- m = 2 à 5,
- X est une fonction hydrolysable.

X est choisi parmi les atomes suivants : le chlore, l'hydrogène, des groupements acyloxy ou, préférentiellement, des groupements alkoxy comprenant 1 à 10 atomes de carbone.
Ils sont choisis avantageusement parmi les perfluoroalkylalkoxysilanes suivants et, en particulier, parmi :

$$CF_3\text{-}(CF_2)_5\text{-}(CH_2)_2\text{-}Si(OR)_3,\ CF_3\text{-}(CF_2)_7\text{-}(CH_2)_2\text{-}Si(OR)_3,$$

$CF_3-(CF_2)_9-(CH_2)_2-Si(OR)_3$,

R étant un méthyle, un éthyle ou un propyle.

Quant aux alkoxysilanes époxydés, ils présentent la formule (II) :

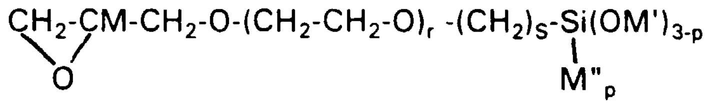 (II)

dans laquelle :

- p = 0 ou 1,
- r = 0, 1 ou 2
- S est un nombre entier compris entre 1 et 6,
- M = H ou un alkyle comprenant 1 à 4 atomes de carbone,
- M' et M" = alkyles comprenant 1 à 3 atomes de carbone.

Des exemples d'alkoxysilanes époxydés sont :

- γ glycidoxypropyltriméthoxysilane,
- γ glycidoxypropyltriéthoxysilane,
- γ glycidoxypropylméthyldiméthoxysilane,
- γ glycidoxypropylméthyldiéthoxysilane.

Les silanes non époxydés présentent la formule (III) suivante :

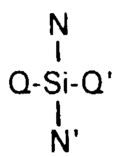 (III)

dans laquelle :

- N et N' sont des groupements organiques liés à l'atome de silicium par une liaison Si-C et qui ne comportent pas de groupement susceptible de réagir avec les silanes hydrolysés présents dans la composition,
- Q et Q' sont des fonctions hydrolysables.

Q et Q' sont choisis indépendamment l'un de l'autre parmi, par exemple, les atomes de chlore, d'hydrogène, des groupements acyloxy ou, préférentiellement, des groupements alkoxy de 1 à 10 atomes de carbone.

Les groupements N et N' du silane de formule (III) ne présentent pas de groupement susceptible de réagir avec les silanes hydrolysés présents dans la composition tels que SiOH ou des groupements pontants tels que des groupements époxy.

Les groupements N et N' sont choisis préférentiellement et indépendamment l'un de l'autre parmi les groupements alkyles comportant de 1 à 10 atomes de carbone ou les groupements aryle de 6 à 10 atomes de carbone, tel que le groupement phényl.

Des exemples de silanes de formule (III) sont le :

- diméthyldiméthoxysilane,
- diméthyldiéthoxysilane,
- méthylphényldiméthoxysilane.

Le catalyseur employé est un catalyseur susceptible d'ouvrir la liaison époxy. Il est choisi parmi les chélates d'aluminium ou les composés de formules (IV) ou (V) :

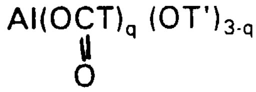 (IV)

$$(T''O)_{3-q}\,Al(OSiT'''_3)_q \qquad (V)$$

dans lesquelles :

- T et T' et T'' sont des groupements alkyles à chaîne linéaire ou ramifiée de 1 à 10 atomes de carbone.
- T''' est un groupement alkyle à chaîne linéaire ou ramifiée de 1 à 10 atomes de carbone, un groupement phényle, un groupement

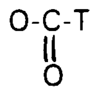

où T a la signification indiquée ci-dessus et q est un nombre entier de 1 à 3.

Lorsque le composé d'aluminium est un chélate d'aluminium, la composition comporte de préférence un solvant organique dont le point d'ébullition à pression atmosphérique est compris entre 70 et 140°C. Comme solvant, on peut utiliser l'éthanol, l'isopropanol, l'acétate d'éthyle, la méthyléthylcétone, le tétrahydropyrane.
De tels solvants peuvent également être utilisés lorsque le catalyseur est un catalyseur répondant à la formule IV ou V.
Les compositions de l'invention peuvent également comporter d'autres solvants organiques, de préférence alcooliques, tels que le méthanol qui sert à ajuster la viscosité des compositions.
On appelle chélate d'aluminium un composé formé en faisant réagir un alcoolate ou un acylate d'aluminium avec des agents séquestrants exempts d'azote et de soufre et contenant de l'oxygène comme atome de coordination. Il s'agit, par exemple, d'un chélate d'aluminium dont la formule (VI) est : $Al(OL)_v\,Y_{3-v}$ dans laquelle : v = 0, 1 ou 2 ; L est un alkyle comprenant 1 à 10 atomes de carbone ; Y est un ligand produit à partir des composés de formules (1) ou (2) :

$$R^1COCH_2COR^2 \qquad (1)$$

$$R^3COCH_2COOR^4 \qquad (2)$$

dans lesquelles $R^1$, $R^2$, $R^3$ et $R^4$ sont des alkyles comprenant 1 à 10 atomes de carbone.
Comme exemples de composés de formule (VI), on peut citer l'acétylacétonate d'aluminium, l'éthylacétoacétate bisacétyl acétonate d'aluminium, le biséthylacétoacétate acétylacétonate d'aluminium, le di n-butoxide monoéthylacétoacétate d'aluminium, le dipropoxyde monométhylacétoacétate d'aluminium.
Comme composés de formule (IV) ou (V), on choisit préférentiellement ceux pour lesquels T' et T'' sont des groupements isopropyle ou éthyle et T et T''' sont des groupements méthyles.
On peut utiliser comme catalyseur un ou plusieurs des composés de formules (IV), (V) ou (VI).
Le catalyseur est utilisé dans des proportions permettant d'obtenir l'ouverture de la liaison époxy de telle sorte qu'on obtienne le durcissement des compositions selon l'invention, en une durée de l'ordre de quelques heures à des températures comprises entre 60 et 200°C. Il est utilisé dans une proportion de 0,1 à 5 % en poids, du poids total de la solution.
La présence de fluorosilanes dont les fluors sont à l'extrémité de la chaîne opposée à celle par laquelle ils sont réticulés confère aux revêtements de l'invention les propriétés d'hydrophobie et d'oléophobie recherchées et contribuent à une fixation forte au réseau améliorant la résistance à l'abrasion.
Selon l'invention, ce revêtement est obtenu à partir d'un hydrolysat du type polysiloxane comportant des groupements réactifs.

Cet hydrolysat est obtenu par l'hydrolyse et la prépolymérisation d'alkoxysilanes époxydés, des silanes non époxydés, des alkylsilanes fluorés et de la silice colloïdale, notamment par les fonctions silanols et époxy.

La présence de silanes époxydés et de la silice colloïdale dans la composition conduit à des revêtements dont la réticulation permet une amélioration des propriétés recherchées et notamment une meilleure résistance à l'abrasion. Sans que l'invention soit liée par cette interprétation, cette propriété peut être rapprochée des particularités de structure des alkoxysilanes époxydés : ils comportent en effet au moins trois groupements réactifs, dont au moins un à chacune de leurs extrémités ce qui lie la chaîne carbonée à ces deux extrémités à un atome de silicium tout en créant au moins trois liaisons -Si-O.

Par ailleurs, l'utilisation de silanes comportant deux groupements réactifs permet d'obtenir un revêtement qui tout en présentant une certaine dureté qui confère une bonne résistance à l'abrasion évite également une trop grande rigidité qui pourrait conduire à l'apparition de craquelures.

Le rapport des alkylsilanes fluorés par rapport aux autres constituants présents dans la couche, à savoir les alkoxysilanes époxydés, les silanes non époxydés et la silice colloïdale, est avantageusement compris entre 0,1 et 6 % et, de préférence entre 0,1 et 4 %, les pourcentages étant des pourcentages massiques par rapport à l'extrait sec de la composition. Malgré la faible quantité des constituants fluorés, le revêtement possède des propriétés hydrophobe et oléophobe satisfaisantes. Ceci est à comparer aux couches de l'art antérieur dans lesquels le rapport des constituants fluorés par rapport aux autres constituants présents dans la couche est sensiblement plus important ce qui renchérit ces revêtements sans pour autant améliorer de façon supplémentaire les propriétés hydrophobes des vitrages obtenus.

Quant à la proportion des alkoxysilanes époxydés dans l'extrait sec théorique, elle est, de préférence, supérieure à 30 %. Une quantité inférieure conduirait à une couche dont la résistance à l'abrasion serait moindre.

Le catalyseur est utilisé en quantité suffisante pour ouvrir les liaisons époxy utiles à l'obtention du copolymère selon l'invention.

Par ailleurs, on préfère les compositions dont l'extrait sec théorique renferme de 5 à 20 % en poids de matières solides provenant du silane non époxydé, préférentiellement de 8 à 16 % en poids, le domaine optimal variant de 10 à 15 % en poids. La proportion relative du silane non époxydé dans la couche influe notamment sur la résistance au choc de la couche obtenue.

Les compositions de l'invention donnant les meilleures propriétés renferment au moins 40 % de matière solide provenant de la silice colloïdale dans l'extrait sec théorique, de préférence de l'ordre de 50 %. Par poids en matière solide provenant de la silice colloïdale, on entend le poids en $SiO_2$. Une quantité supérieure à 50 % conduirait à l'apparition de craquelures dans la couche. Par ailleurs, une proportion inférieure à 40 % entraîne une résistance à l'abrasion de la couche relativement faible.

Par poids en matières solides provenant des constituants A ou B, on entend le poids calculé en unité $Q_{k}$-$SiO_{(4-R)}/2$ dans lesquelles Q est un groupement organique directement lié à l'atome de silicium par une liaison Si-C et $Q_kSiO_{(4-R)}/2$ provient de $Q_kSiR'$ ou Si-R' engendre SiOH par un traitement hydrolytique et k désigne 0,1 ou 2.

Le poids en extrait sec théorique est le poids total calculé de matières solides provenant de l'alkoxysilane époxydé, du silane non époxydé, de la silice colloïdale et du catalyseur.

En pratique, l'extrait sec théorique correspond à peu près à l'extrait sec mesuré.

La couche est obtenue, de préférence, à partir d'une solution comprenant :

- 30-50 % de l'alkoxysilane époxydé,
- 30-55 % de silice colloïdale,
- 10-20 % du silane hydrolysable non époxydé,
- 0,1-6 % d'un ou plusieurs alkylsilane(s) hydrolysable(s) fluoré(s),
- 0,1-5 % d'un catalyseur

les pourcentages étant des pourcentages massiques par rapport à l'extrait sec de la solution.

Selon une variante préférée, la couche est obtenue à partir d'une solution comprenant :

- 35-40 % de l'alkoxysilane époxydé,
- 40-55 % de silice colloïdale,
- 10-15 % du silane hydrolysable non époxydé,
- 0,1-4 % d'un ou plusieurs alkylsilane(s) hydrolysable(s) fluoré(s),
- 0,1-5 % d'un catalyseur

les pourcentages étant des pourcentages massiques par rapport à l'extrait sec de la solution.

Selon une variante particulièrement avantageuse, la couche est obtenue à partir d'une solution comprenant :

- 35-40 % de glycidoxypropyltriméthoxysilane,
- 40-55 % de silice colloïdale,
- 10-15 % de diméthyldiéthoxysilane,
- 0,1-4 % d'un ou plusieurs perfluoroalkylalkoxysilane(s) choisi(s) dans le groupe de perfluoroalkylalkoxysilanes répondant à la formule :

$$CF_3\text{-}(CF_2)_5\text{-}(CH_2)_2\text{-}Si(OEt)_3,$$

$$CF_3\text{-}(CF_2)_7\text{-}(CH_2)_2\text{-}Si(OEt)_3,\ CF_3\text{-}(CF_2)_9\text{-}(CH_2)_2\text{-}Si(OEt)_3,$$

- 0,1-5 % d'acétylacétonate d'aluminium

les proportions étant exprimées en pourcentage en poids par rapport à l'extrait sec de la solution.

D'autres constituants peuvent être ajoutés à la solution. Il peut s'agir de tensioactif afin d'améliorer la mouillabilité de la solution sur le support destiné à être enduit. Ce tensioactif est, par exemple, du type silicone ou un tensioactif fluoré. On peut également ajouter des catalyseurs destinés à accélérer la réticulation, des antioxydants, des pigments, des absorbeurs d'U.V. ou tout autre constituant destiné à améliorer ou conférer certaines propriétés au vitrage.

Les inventeurs ont montré que le procédé pour obtenir ce revêtement influe sur sa structure et donc sur ses propriétés.

Il est tout d'abord préférable de bien contrôler la quantité d'eau nécessaire à l'hydrolyse. Cette quantité peut être introduite dans le mélange sous forme d'eau pure ou de solution, par exemple acide.

L'hydrolyse peut également s'effectuer sans apport d'eau, c'est-à-dire grâce aux seules molécules d'eau résultant des réactions de condensation. Par ailleurs, la quantité d'eau influe directement sur la polymérisation des alkoxysilanes. Plus la quantité d'eau est importante, plus le réseau est dense donc résistant à l'abrasion. Cependant un réseau trop dense risque, d'une part de se craqueler et, d'autre part, de gêner le dépôt de la solution sur le vitrage par une viscosité trop élevée. Un compromis doit donc être trouvé.

Selon une variante avantageuse, on ajoute une solution acide aux alkoxysilanes de départ, la quantité d'eau étant la quantité stoechiométrique par rapport aux groupements silanols de l'alkoxysilane époxydé et non époxydé. D'autre part, la silice est avantageusement introduite sous forme de silice en suspension dans une solution alcoolique, c'est-à-dire sans apport d'eau supplémentaire. Des solvants peuvent, éventuellement, être ajoutés afin d'ajuster la viscosité de la solution au moment du dépôt sur le support.

Un procédé d'obtention de la couche comprend par exemple les étapes suivantes :

- l'hydrolyse et la condensation partielle de l'alkoxysilane époxydé et du silane non époxydé,
- l'ajout d'autres constituants séparément ou simultanément, en particulier de la silice colloïdale et un catalyseur,
- un ou plusieurs alkylsilane(s) fluoré(s) étant ajouté(s) pendant l'hydrolyse et/ou la condensation des alkoxysilanes.

Pour obtenir ces différentes étapes, il est important d'éviter les réactions secondaires susceptibles de se produire.

Ainsi, les alkylalkoxysilanes fluorés sont préférés aux alkylsilanes fluorés dont le groupement hydrolysable est un halogène, par exemple un chlore, afin d'éviter des réactions d'alkylsilanes fluorés entre eux. Par ailleurs, le dégagement d'HCl, issu de cette réaction, modifierait le pH de la solution et donc les conditions opératoires.

De façon plus détaillée, on forme tout d'abord l'hydrolysat d'alkoxysilane époxydé et du silane non époxydé en présence d'une solution acide stoechiométrique par rapport aux groupements silanols des deux silanes. Le ou les alkylsilane(s) fluoré(s) est(sont) introduit(s) avant, pendant ou après l'introduction de l'alkoxysilane non époxydé. Les autres constituants sont alors introduits, en particulier la silice colloïdale et un catalyseur susceptible d'ouvrir la liaison époxy. Afin de contrôler la quantité d'eau présente, la silice est en suspension dans une solution alcoolique. Le diamètre des particules de silice est compris entre 10 et 20 nanomètres.

Selon une variante préférée, on attend quelques heures avant d'introduire les autres constituants. La silice peut toutefois être ajoutée avant ou après ce laps de temps.

La viscosité de la solution obtenue est comprise entre 1 et 6 centipoises.

Après une préparation d'au moins une des faces du support, on met en contact ledit support avec la solution contenant au moins un alkoxysilane époxydé, un alkoxysilane non époxydé, de la silice colloïdale, un catalyseur et au moins un alkylsilane fluoré. Lors de cette mise en contact, les solvants commencent à s'évaporer de telle sorte que la solution forme un gel. Ce gel est ensuite réticulé.

La préparation du support est une étape importante car elle détermine le nombre de sites réactifs du support susceptibles de réagir avec les alkoxysilanes et, éventuellement, les organosilanes fluorés destinés à former la couche

non mouillable.

La préparation a pour rôle d'éliminer toutes les contaminations essentiellement organiques, adsorbées à la surface du support et susceptibles de s'opposer à une éventuelle réaction ultérieure des alkoxysilanes sur les sites réactifs du support.

Le traitement proprement dit du support s'effectue par mise en contact du vitrage avec la solution. Cette mise en contact peut se faire par tout moyen, par exemple par coulée, pulvérisation, centrifugation, trempé, immersion ou au moyen d'un rouleau enducteur. Elle est effectuée de telle sorte que l'épaisseur du revêtement après réticulation satisfasse aux propriétés exigées sur l'article revêtu. L'épaisseur doit être telle qu'elle n'altère pas, par exemple, les propriétés optiques du vitrage tout en conférant l'hydrophobie, l'oléophobie et la résistance à l'abrasion recherchées. Cette épaisseur est, avantageusement, comprise entre 0,1 et 10 microns, préférentiellement entre 0,1 et 4 microns.

La réticulation du gel est obtenue par un maintien à une température comprise entre 60 et 200°C pendant au moins une heure.

Les supports susceptibles d'être enduits peuvent être en verre ayant ou non subi une trempe thermique ou chimique, obtenu par exemple par le procédé de verre "flotté". Ce verre peut être revêtu préalablement d'une couche minérale par exemple à base d'oxyde d'étain ou d'ITO. Il peut également être en matériau polymère éventuellement préalablement revêtu d'une couche minérale, par exemple du type $SiO_2$.

Les exemples suivants, non limitatifs, illustrent les caractéristiques et les avantages de la présente invention.

**EXEMPLE 1**

L'exemple 1 illustre le caractère hydrophobe de la composition selon l'invention. On prépare deux solutions :

- l'une contenant 0,2 % d'organosilanes fluorés,
- l'autre contenant 1 % d'organosilanes fluorés.

Ces solutions sont préparées comme suit : on fait tomber goutte à goutte une solution acide d'HCl dans une solution contenant du glycidoxypropyltriméthoxysilane et du diméthyldiéthoxysilane ; on ajoute ensuite des organosilanes fluorés.

La solution est agitée 24 heures à température ambiante puis on introduit une suspension alcoolique contenant 30 % de silice colloïdale, de l'acétylacétonate d'aluminium, du méthyléthylcétone et un tensioactif du type silicone.

Les proportions sont les suivantes :

| | Solution 1 | Solution 2 |
|---|---|---|
| • glycidoxypropyltriméthoxysilane | 18,6 | 18,5 |
| • HCl 0,1 normale | 6,6 | 6,6 |
| • diméthyldiéthoxysilane | 9,7 | 9,6 |
| • organosilane fluoré | 0,2 | 1 |
| • $SiO_2$ en solution alcoolique | 60,6 | 59,4 |
| • acétylacétonate d'aluminium | 1,2 | 1,2 |
| • méthyléthylcétone | 3,6 | 3,6 |
| • tensioactif | 0,1 | 0,1 |

Deux supports en verre minéral, "flotté", sont nettoyés en les plongeant tout d'abord dans une solution contenant un tensioactif. Elles sont ensuite plongées dans une solution basique, rincées et séchées.

On dépose par trempe les solutions 1 et 2 sur les supports 1 et 2 respectivement. Lors du dépôt, les solvants, l'alcool et le méthyléthylcétone commencent à s'évaporer de telle sorte que la solution forme un gel.

Le support revêtu d'une couche est ensuite étuvé 3 heures à 100°C. L'épaisseur de la couche est d'environ 3 µm.

Les angles de contact mesurés de l'eau sur le verre ainsi traité sont de 104° pour le support 1 et de 102° pour le support 2.

Cet exemple illustre le caractère hydrophobe des couches obtenues selon l'invention.

**EXEMPLE 2**

L'exemple 2 illustre la résistance à l'abrasion des couches de l'invention déposées sur un support en verre minéral.

Trois échantillons d'un troisième support en verre minéral, "flotté", sont testés.
Ils sont revêtus de la solution 2 de l'exemple 1.
Ils sont étuvés une heure à 100°C. L'épaisseur des couches est d'environ 3 µm.
La moyenne de l'angle de contact initial de l'eau sur les échantillons est égale à 104°.
Un échantillon est soumis au test dit de TABER selon la norme ASTM 1044-78. Il est abrasé par une meule tournante du type CS-10F sous une charge de 500 g. Au bout de 100 tours, l'angle de contact mesuré de l'eau sur le support 3 est de 90°.
Le deuxième échantillon est plongé deux heures dans l'eau bouillante. L'angle de contact mesuré de l'eau sur le support est égal à 102°.
Le troisième échantillon est plongé quatre heures dans l'eau bouillante. L'angle de contact de l'eau sur le support est égal à 92°.
Cet exemple illustre la résistance à l'abrasion de la couche selon l'invention sur des supports en verre minéral.

**EXEMPLE 3**

On utilise la solution 2 décrite dans l'exemple 1 pour revêtir, par une technique de centrifugation (vitesse de rotation : 1500 t/min), des lentilles ophtalmiques ORMA en verre organique constitué d'un polymère de di(alkylcarbonate) de diéthylène glycol.
Ces lentilles sont ensuite étuvées pendant 3 heures à 100°C.
L'épaisseur du revêtement est de 2,75 µm.
Pour mesurer la résistance à l'abrasion, on utilise le test BAYER pratiqué conformément à la norme ASTMF735-81.
Une valeur élevée au test BAYER correspond à un degré élevé de résistance à l'abrasion.
La valeur mesurée pour le revêtement est de 2.94.
La résistance à la rayure est mesurée par le test à la laine d'acier :

- on utilise de la laine d'acier extra fine n° 000 STARWAX,
- avec un morceau de laine d'acier d'environ 3 cm sur 3 cm plié sur lui-même, on effectue 10 allers-retours en frottant le verre revêtu dans le sens des fibres avec une pression constante lors de cette opération,
- le verre est ensuite essuyé avec un chiffon sec, puis rincé à l'alcool,
- on apprécie ensuite visuellement l'état du verre et l'on attribue une notation en fonction de la graduation suivante :

  0 aucune rayure observée,
  1 verre très peu rayé (0 à 5 rayures)
  2 verre peu rayé (jusqu'à 20 rayures)
  3 verre assez rayé (jusqu'à 50 rayures)
  4 verre très rayé (nombre de rayures supérieur à 50)
  5 verre équivalent ou plus mauvais que le substrat nu (ORMA)

La valeur mesurée pour le revêtement est de 0.5-1.
Cet exemple illustre la résistance à l'abrasion de la couche sur un support en verre organique.

## Revendications

1. Composition thermodurcissable pour un revêtement hydrophobe, oléophobe et résistant à l'abrasion comprenant un hydrolysat obtenu à partir d'une solution comprenant :

   - un alkoxysilane époxydé de formule générale :

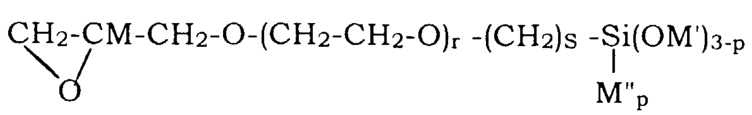

(II)

   dans laquelle :

   - p = 0 ou 1,

- r = 0, 1 ou 2
- S est un nombre entier compris entre 1 et 6,
- M = H ou un alkyle comprenant 1 à 4 atomes de carbone,
- M' et M" = alkyles comprenant 1 à 3 atomes de carbone ;

- un silane non époxydé hydrolysable de formule générale :

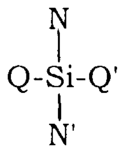

(III)

dans laquelle :

- N et N' sont des groupements organiques liés à l'atome de silicium par une liaison Si-C et qui ne comportent pas de groupement susceptible de réagir avec les silanes hydrolysés présents dans la composition,
- Q et Q' sont choisis indépendamment l'un de l'autre parmi les atomes de chlore, d'hydrogène, des groupements acyloxy ou des groupements alkoxy de 1 à 10 atomes de carbone ;

- de la silice colloïdale ;
- un catalyseur susceptible d'ouvrir la liaison époxy ;
- et au moins un alkylsilane fluoré hydrolysable.

**2.** Composition selon la revendication 1, caractérisée en ce que l'alkylsilane fluoré est un perfluoroalkylsilane dont la formule générale est :

$$CF_3\text{-}(CF_2)_n\text{-}(CH_2)_m\text{-}SiK_3 \qquad (I)$$

dans laquelle :

- n = 0 à 12,
- m = 2 à 5,
- X est choisi parmi les atomes de chlore, d'hydrogène, des groupements acyloxy ou des groupements alkoxy comprenant 1 à 10 atomes de carbone.

**3.** Composition selon la revendication 2, caractérisée en ce que le perfluoroalkylsilane choisi dans le groupe comprenant les perfluoroalkylalkoxysilanes suivants répondant à la formule :

$$CF_3\text{-}(CF_2)_5\text{-}(CH_2)_2\text{-}Si(OR)_3,$$

$$CF_3\text{-}(CF_2)_7\text{-}(CH_2)_2\text{-}Si(OR)_3,\ CF_3\text{-}(CF_2)_9\text{-}(CH_2)_2\text{-}Si(OR)_3,$$

dans laquelle R est un méthyle, un éthyle ou un propyle.

**4.** Composition selon l'une des revendications précédentes, caractérisée en ce que la proportion en alkylsilane fluoré, par rapport à l'extrait sec de la solution est comprise entre 0,1 et 6 % en poids.

**5.** Composition selon la revendication 4, caractérisée en ce que la proportion en alkylsilane fluoré par rapport à l'extrait sec de la solution est comprise entre 0,1 et 4 % en poids.

**6.** Composition selon la revendication 1, caractérisée en ce que l'alkoxysilane époxydé est choisi parmi le groupe comprenant :

- γ glycidoxypropyltriméthoxysilane,
- γ glycidoxypropyltriéthoxysilane,
- γ glycidoxypropylméthyldiméthoxysilane,
- γ glycidoxypropylméthyldiéthoxysilane.

**7.** Composition selon la revendication 1, caractérisée en ce que l'alkoxysilane non époxydé est un dialkoxysilane dont les groupements N et N' sont choisis parmi les groupements alkyls comprenant de 1 à 10 atomes de carbone et les groupements aryles comprenant de 6 à 10 atomes de carbone.

**8.** Composition selon la revendication 1, caractérisée en ce que le catalyseur est un chélate d'aluminium.

**9.** Composition selon la revendication 1, caractérisée en ce que la solution comprend un tensioactif du type silicone, ou un tensioactif fluoré.

**10.** Composition selon l'une quelconque des revendications précédentes, caractérisée en ce qu'elle comprend un hydrolysat obtenu à partir d'une solution comprenant :

- 30 à 50 % de l'alkoxysilane époxydé,
- 30 à 55 % de silice colloïdale,
- 10 à 20 % du silane non époxydé hydrolysable,
- 0,1 à 6 % d'un ou plusieurs alkylsilane(s) fluoré(s) hydrolysable(s),
- 0,1 à 5 % d'un catalyseur

les pourcentages étant des pourcentages en poids par rapport à l'extrait sec de la solution.

**11.** Composition selon la revendication 10, caractérisée en ce qu'elle comprend un hydrolysat obtenu à partir d'une solution comprenant :

- 35 à 40 % de l'alkoxysilane époxydé,
- 40 à 55 % de silice colloïdale,
- 10 à 15 % du alkoxysilane non époxydé hydrolysable,
- 0,1 à 4 % d'un ou plusieurs alkylsilane(s) fluoré(s) hydrolysable,
- 0,1 à 5 % d'un catalyseur

les pourcentages étant des pourcentages en poids par rapport à l'extrait sec de la solution.

**12.** Composition selon la revendication 1, caractérisée en ce qu'elle comprend un hydrolysat obtenu à partir d'une solution comprenant :

- 35 à 40 % de glycidoxypropyltriméthoxysilane,
- 40 à 55 % de silice colloïdale,
- 10 à 15 % de diméthyldiéthoxysilane,
- 0,1 à 4 % d'un ou plusieurs perfluoroalkylalkoxysilane(s) choisi(s)

dans le groupe de perfluoroalkylalkoxysilanes répondant à la formule :

$$CF_3\text{-}(CF_2)_5\text{-}(CH_2)_2\text{-}Si(OEt)_3,\ CF_3\text{-}(CF_2)_7\text{-}(CH_2)_2\text{-}Si(OEt)_3,$$

$$CF_3\text{-}(CF_2)_9\text{-}(CH_2)_2\text{-}Si(OEt)_3,$$

- 0,1 à 5 % d'acétylacétonate d'aluminium,

les pourcentages étant des pourcentages en poids par rapport à l'extrait sec de la solution.

**13.** Procédé d'obtention d'une couche hydrophobe, oléophobe et résistante à l'abrasion, caractérisée en ce qu'elle comprend les étapes suivantes :

- l'hydrolyse et la condensation partielle du alkoxysilane époxydé et du silane non époxydé, tels que définis dans les formules (II) et (III) de la revendication 1,
- l'ajout de la silice colloïdale et d'un catalyseur séparément ou simultanément,
- un ou plusieurs alkylsilane(s) fluoré(s) étant ajouté(s) pendant l'hydrolyse et/ou la condensation partielle des silanes.

**14.** Procédé selon la revendication 13, caractérisé en ce que l'hydrolyse de l'alkoxysilane époxydé et du silane non époxydé est obtenue en ajoutant une solution acide, la quantité d'eau étant la quantité stoechiométrique par rapport aux groupements silanols de l'alkoxysilane époxydé et du silane non époxydé.

**15.** Procédé selon la revendication 14 dans lequel l'alkoxysilane époxydé et le silane non époxydé sont tels que définis dans la revendication 1, étant entendu que dans la formule (III) du silane non époxydé, N et N' sont mis indépendamment l'un de l'autre pour un groupe alkyle comprenant 1 à 10 atomes de carbone ou pour un groupe aryle comprenant 6 à 10 atomes de carbone, et dans lequel l'alkylsilane fluoré est tel que défini dans la revendication 2.

**16.** Substrat en verre organique ou minéral revêtu d'une couche hydrophobe, oléophobe et résistante à l'abrasion, caractérisé en ce que la couche est obtenue à partir d'une composition selon l'une des revendications 1 à 12.

**17.** Vitrage revêtu d'une couche hydrophobe, oléophobe et résistante à l'abrasion, caractérisé en ce que la couche est obtenue à partir d'une composition selon l'une des revendications 1 à 12.

**18.** Vitrage revêtu d'une couche selon la revendication 17, caractérisé en ce que l'épaisseur de la couche est comprise entre 0,1 et 10 µm.

**19.** Substrat selon la revendication 16, caractérisé en ce que ce substrat est une lentille ophtalmique.

**20.** Procédé de fabrication d'un vitrage revêtu d'une couche hydrophobe, oléophobe et résistante à l'abrasion, caractérisé en ce qu'elle comprend les étapes suivantes :

- préparation d'au moins une des faces du support,
- mise en contact du support avec une solution comprenant un alkoxysilane époxydé, un silane non époxydé hydrolysable, de la silice colloïdale, un catalyseur et au moins un alkylsilane fluoré hydrolysable, la solution formant un gel lors de la mise en contact,
- réticulation du gel formé sur le support.

**21.** Procédé selon la revendication 20, caractérisé en ce que la réticulation du gel est obtenue par un maintien à une température comprise entre 60 et 200°C pendant au moins une heure.

## Claims

**1.** Thermosetting composition for a hydrophobic, oleophobic and abrasion-resistant coating comprising a hydrolyzate obtained from a solution including:

- an epoxidized alkoxy silane of general formula:

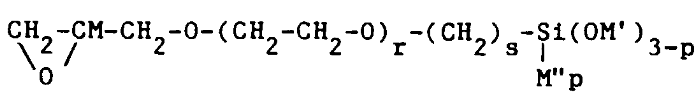

(II)

in which:

p = 0 or 1,
r = 0, 1 or 2,
S is an integer between 1 and 6,
M = H or an alkyl having 1 to 4 carbon atoms,
M' and M" = alkyls having 1 to 3 carbon atoms,

- a hydrolyzable, non-epoxidized silane of general formula:

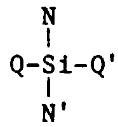

(III)

in which:

N and N' are organic groups linked to the silicon atom by a Si-C bond and having no group able to react with the hydrolyzed silanes present in the composition,
Q and Q' are chosen independently of one another among the chlorine atoms, hydrogen atoms, acyloxy groups or alkoxy groups with 1 to 10 carbon atoms,

- colloidal silica,
- a catalyst able to open the epoxy bond,
- and at least one hydrolyzable, fluorine-containing alkyl silane.

**2.** Composition according to claim 1, characterized in that the fluorine-containing alkyl silane is a perfluoroalkyl silane, whose general formula is:

$$CF_3\text{-}(CF_2)_n\text{-}(CH_2)_m\text{-}SiX_3 \qquad (I)$$

in which:

n = 0 to 12,
m = 2 to 5,
X is chosen from among chlorine atoms, hydrogen atoms, acyloxy groups or alkoxy groups having 1 to 10 carbon atoms.

**3.** Composition according to claim 2, characterized in that the perfluoroalkyl silane is chosen from within the group including the following perfluoroalkylalkoxy silanes in accordance with the formula:

$$CF_3\text{-}(CF_2)_5\text{-}(CH_2)_2\text{-}Si)OR)_3,$$

$$CF_3\text{-}(CF_2)_7\text{-}(CH_2)_2\text{-}Si)OR)_3,\ CF_3\text{-}(CF_2)_9\text{-}(CH_2)_2\text{-}Si(OR)_3,$$

in which R is a methyl, ethyl or propyl.

**4.** Composition according to one of the preceding claims, characterized in that the fluorine-containing alkyl silane proportion, based on the dry extract of the solution, is between 0.1 and 6 wt.%.

**5.** Composition according to claim 4, characterized in that the fluorine-containing alkyl silane proportion, based on the dry extract of the solution, is between 0.1 and 4 wt.%.

**6.** Composition according to claim 1, characterized in that the epoxidized alkoxy silane is chosen from within the group including:

γ-glycidoxypropyltrimethoxysilane,
γ-glycidoxypropyltriethoxysilane,
γ-glycidoxypropylmethyldimethoxysilane,
γ-glycidoxypropylmethyldiethoxysilane.

**7.** Composition according to claim 1, characterized in that the non-epoxidized alkoxysilane is a dialkoxysilane, whose

N and N' groups are chosen from among alkyl groups having 1 to 10 carbon atoms and aryl groups having 6 to 10 carbon atoms.

**8.** Composition according to claim 1, characterized in that the catalyst is an aluminium chelate.

**9.** Composition according to claim 1, characterized in that the solution comprises a silicone-type surfactant or a fluorine surfactant.

**10.** Composition according to any one of the preceding claims, characterized in that it comprises a hydrolyzate obtained from a solution including: 30 to 50% epoxidized alkoxysilane,

30 to 55% colloidal silica,
10 to 20% hydrolyzable, non-epoxidized silane,
0.1 to 6% of one or more hydrolyzable, fluorine-containing alkylsilanes,
0.1 to 5% of a catalyst,

the percentages being weight percentages, based on the dry extract of the solution.

**11.** Composition according to claim 10, characterized in that it comprises a hydrolyzate obtained from a solution including:

35 to 40% epoxidized alkoxysilane,
40 to 55% colloidal silica,
10 to 15% hydrolyzable, non-epoxidized alkoxysilane,
0.1 to 4% of one or more hydrolyzable, fluorine-containing alkylsilanes,
0.1 to 5% of a catalyst,

the percentages being weight percentages, based on the dry extract of the solution.

**12.** Composition according to claim 1, characterized in that it comprises a hydrolyzate obtained from a solution including:

35 to 40% glycidoxypropyltrimethoxysilane,
40 to 55% colloidal silica,
10 to 15% dimethyldiethoxysilane,
0.1 to 4% of one or more perfluoroalkylalkoxysilanes chosen from within the group of perfluoroalkylalkoxysilanes complying with the formula:

$$CF_3\text{-}(CF_2)_5\text{-}(CH_2)_2\text{-}Si(OEt)_3,\ CF_3\text{-}(CF_2)_7\text{-}(CH_2)_2\ Si(OEt)_3,$$

$$CF_3\text{-}(CF_2)_9\text{-}(CH_2)_2\text{-}Si(OEt)_3,$$

0.1 to 5% aluminium acetylacetonate,

the percentages being weight percentages, based on the dry extract of the solution.

**13.** Process for obtaining a hydrophobic, oleophobic and abrasion-resistant coating, characterized in that it comprises the following stages:

- the hydrolysis and partial condensation of the epoxidized alkoxysilane and the non-epoxidized silane, as defined in formulas II and III of claim 1,
- the addition of the colloidal silica and a catalyst separately or simultaneously,
- one or more fluorine-containing alkylsilanes being added during hydrolysis and/or partial condensation of the silanes.

**14.** Process according to claim 13, characterized in that the hydrolysis of the epoxidized alkoxysilane and the non-epoxidized silane is obtained by adding an acid solution, the water quantity being the stoichiometric quantity with

request to the silanol groups of the epoxidized alkoxysilane and the non-epoxidized silane.

**15.** Process according to claim 14, wherein the epoxidized alkoxysilane and the non-epoxidized silane are as defined in claim 1, it being understood that in formula (III) of the non-epoxidized silane, N and N' are placed independently of one another for an alkyl group having 1 to 10 carbon atoms or for an aryl group having 6 to 10 carbon atoms, and wherein the fluorine-containing alkylsilane is as defined in claim 2.

**16.** Mineral or organic glass substrate coated with a hydrophobic, olephobic and abrasion-resistant covering, characterized in that the covering is obtained from a composition according to one of the claims 1 to 12.

**17.** Glazing covered with a hydrophobic, oleophobic and abrasion-resistant covering, characterized in that the covering is obtained from a composition according to one of the claims 1 to 12.

**18.** Glazing covered with a covering according to claim 17, characterized in that the thickness of the covering is between 0.1 and 10 µm.

**19.** Substrate according to claim 16, characterized in that said substrate is an ophthalmic lens.

**20.** Process for the production of a glazing covered with a hydrophobic, oleophobic and abrasion-resistant covering, characterized in that it comprises the following stages:

- preparation of at least one of the faces of the support,
- contacting the support with a solution including an epoxidized alkoxy silane, a hydrolyzable, non-epoxidized silane, colloidal silica, a catalyst and at least one hydrolyzable, fluorine-containing, alkylsilane, the solution forming a gel during contacting,
- crosslinking the gel formed on the support.

**21.** Process according to claim 20, characterized in that the crosslinking of the gel is obtained by maintaining a temperature between 60 and 200°C for at least one hour.

## Patentansprüche

**1.** Wärmeaushärtbare Zusammensetzung für eine hydrophobe, oleophobe und abriebbeständige Beschichtung, welche ein Hydrolysat umfaßt, das aus einer Lösung erhalten ist, die

- ein epoxidiertes Alkoxysilan der allgemeinen Formel

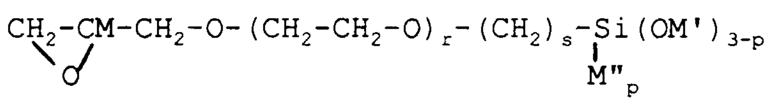

(II),

in welcher

  - p = 0 oder 1,
  - r = 0, 1 oder 2,
  - s eine ganze Zahl von 1 bis 6,
  - M = H oder ein Alkylrest mit 1 bis 4 Kohlenstoffatomen,
  - M' und M" = Alkylreste mit 1 bis 3 Kohlenstoffatomen bedeuten,

- ein hydrolysierbares nicht epoxidiertes Silan der allgemeinen Formel

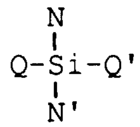 (III),

in welcher

- N und N' organische Gruppen bedeuten, die an das Siliciumatom über eine Si-C-Bindung gebunden sind und keine Gruppe enthalten, die in der Lage ist, mit den in der Zusammensetzung vorhandenen hydrolysierten Silanen zu reagieren, und

  - Q und Q' unabhängig voneinander aus dem Chloratom, dem Wasserstoffatom und Acyloxy- oder Alkoxygruppen mit 1 bis 10 Kohlenstoffatomen ausgewählt sind,
  - kolloidales Siliciumdioxid,
  - einen Katalysator, der in der Lage ist, die Epoxybindung zu öffnen, und
  - mindestens ein hydrolysierbares fluoriertes Alkylsilan

enthält.

**2.** Zusammensetzung nach Anspruch 1, **dadurch gekennzeichnet**, daß das fluorierte Alkylsilan ein Perfluoralkylsilan ist, dessen allgemeine Formel

$$CF_3\text{-}(CF_2)_n\text{-}(CH_2)_m\text{-}SiX_3 \qquad (I)$$

lautet, in welcher

- n = 0 bis 12,
- m = 2 bis 5 und
- X aus dem Chloratom, dem Wasserstoffatom und Acyloxy- oder Alkoxygruppen mit 1 bis 10 Kohlenstoffatomen ausgewählt ist.

**3.** Zusammensetzung nach Anspruch 2, **dadurch gekennzeichnet**, daß das Perfluoralkylsilan aus der Gruppe ausgewählt wird, die folgende Perfluoralkylalkoxysilane mit der Formel

$$CF_3\text{-}(CF_2)_5\text{-}(CH_2)_2\text{-}Si(OR)_3,$$

$$CF_3\text{-}(CF_2)_7\text{-}(CH_2)_2\text{-}Si(OR)_3,\ CF_3\text{-}(CF_2)_9\text{-}(CH_2)_2\text{-}Si(OR)_3$$

umfaßt, in welcher R einen Methyl-, Ethyl- oder Propylrest bedeutet.

**4.** Zusammensetzung nach einem der vorhergehenden Ansprüche, **dadurch gekennzeichnet**, daß der Anteil an fluoriertem Alkylsilan, bezogen auf den Trockenextrakt der Lösung, 0,1 bis 6 Gew.-% beträgt.

**5.** Zusammensetzung nach Anspruch 4, **dadurch gekennzeichnet**, daß der Anteil an fluoriertem Alkylsilan, bezogen auf den Trockenextrakt der Lösung, 0,1 bis 4 Gew.-% beträgt.

**6.** Zusammensetzung nach Anspruch 1, **dadurch gekennzeichnet**, daß das epoxidierte Alkoxysilan aus der Gruppe ausgewählt ist, die

- γ-Glycidoxypropyltrimethoxysilan,
- γ-Glycidoxypropyltriethoxysilan,

- γ-Glycidoxypropylmethyldimethoxysilan und
- γ-Glycidoxypropylmethyldiethoxysilan

umfaßt.

7. Zusammensetzung nach Anspruch 1, **dadurch gekennzeichnet**, daß das nicht epoxidierte Alkoxysilan ein Dialkoxysilan ist, dessen N- und N'-Gruppe aus 1 bis 10 Kohlenstoffatome enthaltenden Alkylgruppen und 6 bis 10 Kohlenstoffatome enthaltenden Arylgruppen ausgewählt sind.

8. Zusammensetzung nach Anspruch 1, **dadurch gekennzeichnet**, daß der Katalysator ein Aluminiumchelat ist.

9. Zusammensetzung nach Anspruch 1, **dadurch gekennzeichnet**, daß die Lösung ein grenzflächenaktives Mittel wie ein Silicon oder ein fluoriertes grenzflächenaktives Mittel enthält.

10. Zusammensetzung nach einem der vorhergehenden Ansprüche, **dadurch gekennzeichnet**, daß sie ein Hydrolysat umfaßt, das aus einer Lösung erhalten ist, die

- 30 bis 50 % des epoxidierten Alkoxysilans,
- 30 bis 55 % kolloidales Siliciumdioxid,
- 10 bis 20 % des hydrolysierbaren nicht epoxidierten Silans,
- 0,1 bis 6 % eines hydrolysierbaren fluorierten Alkylsilans oder mehrerer hydrolysierbarer fluorierter Alkylsilane und
- 0,1 bis 5 % eines Katalysators

enthält, wobei die Anteile auf den Trockenextrakt der Lösung bezogene Gewichtsprozente sind.

11. Zusammensetzung nach Anspruch 10, **dadurch gekennzeichnet**, daß sie ein Hydrolysat umfaßt, das aus einer Lösung erhalten ist, die

- 35 bis 40 % des epoxidierten Alkoxysilans,
- 40 bis 55 % kolloidales Siliciumdioxid,
- 10 bis 15 % des hydrolysierbaren nicht epoxidierten Alkoxysilans,
- 0,1 bis 4 % eines hydrolysierbaren fluorierten Alkylsilans oder mehrerer hydrolysierbarer fluorierter Alkylsilane und
- 0,1 bis 5 % eines Katalysators

enthält, wobei die Anteile auf den Trockenextrakt der Lösung bezogene Gewichtsprozente sind.

12. Zusammensetzung nach Anspruch 1, **dadurch gekennzeichnet**, daß sie ein Hydrolysat umfaßt, das aus einer Lösung erhalten ist, die

- 35 bis 40 % Glycidoxypropyltrimethoxysilan,
- 40 bis 55 % kolloidales Siliciumdioxid,
- 10 bis 15 % Dimethyldiethoxysilan,
- 0,1 bis 4 % eines oder mehrerer Perfluoralkylalkoxysilane, die ausgewählt sind aus der Gruppe der Perfluoralkylalkoxysilane mit der Formel

$$CF_3\text{-}(CF_2)_5(CH_2)_2\text{-}Si(OEt)_3,\ CF_3\text{-}(CF_2)_7\text{-}(CH_2)_2\text{-}Si(OEt)_3,$$

$$CF_3\text{-}(CF_2)_9\text{-}(CH_2)_2\text{-}Si(OEt)_3,$$

  und
- 0,1 bis 5 % Aluminiumacetylacetonat

enthält, wobei die Anteile auf den Trockenextrakt der Lösung bezogene Gewichtsprozente sind.

13. Verfahren zur Herstellung einer hydrophoben, oleophoben und abriebbeständigen Schicht, **dadurch gekenn-**

**zeichnet**, daß es die Stufen:

- Hydrolyse und partielle Kondensation des epoxidierten Alkoxysilans und des nicht epoxidierten Silans, wie durch die Formeln (II) und (III) von Anspruch 1 definiert,
- getrennte oder gleichzeitige Zugabe des kolloidalen Siliciumdioxids und eines Katalysators und
- Zugabe eines oder mehrerer fluorierter Alkylsilane während der Hydrolyse und/oder partiellen Kondensation der Silane

umfaßt.

**14.** Verfahren nach Anspruch 13, **dadurch gekennzeichnet**, daß man die Hydrolyse des epoxidierten Alkoxysilans und des nicht epoxidierten Silans durchführt, indem eine saure Lösung zugegeben wird, wobei die Wassermenge die in bezug auf die Silanolgruppen des epoxidierten Alkoxysilans und des nicht epoxidierten Silans stöchiometrische Menge ist.

**15.** Verfahren nach Anspruch 14, in welchem das epoxidierte Alkoxysilan und das nicht epoxidierte Silan wie im Anspruch 1 definiert sind, wobei selbstverständlich ist, daß in Formel (III) des nicht epoxidierten Silans N und N' unabhängig voneinander eine 1 bis 10 Kohlenstoffatome enthaltende Alkylgruppe oder eine 6 bis 10 Kohlenstoffatome enthaltende Arylgruppe sind, und in welchem das fluorierte Alkylsilan wie in Anspruch 2 definiert ist.

**16.** Substrat aus organischem oder anorganischem Glas, welches mit einer hydrophoben, oleophoben und abriebbeständigen Schicht überzogen ist, **dadurch gekennzeichnet**, daß die Schicht aus einer Zusammensetzung nach einem der Ansprüche 1 bis 12 erhalten worden ist.

**17.** Mit einer hydrophoben, oleophoben und abriebbeständigen Schicht überzogene Verglasung, **dadurch gekennzeichnet**, daß die Schicht aus einer Zusammensetzung nach einem der Ansprüche 1 bis 12 erhalten worden ist.

**18.** Mit einer Schicht nach Anspruch 17 überzogene Verglasung, **dadurch gekennzeichnet**, daß die Schichtdicke 0,1 bis 10 µm beträgt.

**19.** Substrat nach Anspruch 16, **dadurch gekennzeichnet**, daß das Substrat ein Augenglas ist.

**20.** Verfahren zur Herstellung einer mit einer hydrophoben, oleophoben und abriebbeständigen Schicht überzogenen Verglasung, **dadurch gekennzeichnet**, daß es die Stufen:

- Vorbereitung wenigstens einer Seite des Trägers,
- In-Kontakt-Bringen des Trägers mit einer Lösung, die ein epoxidiertes Alkoxysilan, ein hydrolysierbares nicht epoxidiertes Silan, kolloidales Siliciumdioxid, einen Katalysator und mindestens ein hydrolysierbares fluoriertes Alkylsilan enthält, wobei die Lösung während des In-Kontakt-Bringens ein Gel bildet, und
- Vernetzung des auf dem Träger gebildeten Gels

umfaßt.

**21.** Verfahren nach Anspruch 20, **dadurch gekennzeichnet**, daß die Vernetzung des Gels durch ein mindestens einstündiges Halten bei einer Temperatur von 60 bis 200 °C erreicht wird.